# EUROPEAN PATENT APPLICATION

(11) **EP 1 864 599 A1**
(43) Date of publication of application: **12.12.2007**
(21) Application number: 07008617.8
(22) Date of filing: 27.04.2007
(51) Int. Cl.: A47J 37/06

(54) **Multi-purpose grill**

(30) Priority: 29.05.2006 CN 200620115391 U
(71) Applicant: South Asia International (H.K.) Ltd., Hunghom, Kowloon (CN)
(72) Inventor: Lam, Hoi Tak Raymond, Hunghom Kowloon (HK)
(74) Representative: Curell Aguilà, Marcelino

(57) **Abstract**

The present invention provides a grill comprising two supporting walls (30), an upper heating assembly (10) and a lower heating assembly (20) wherein the upper heating assembly and the lower heating assembly are arranged between the two supporting walls, characterized in that: the upper and lower heating assemblies (10,20) are pivotally connected with the supporting walls through a specific hinge. Preferably, an angle adjusting mechanism is arranged on one end of the lower heating assembly (20), whereby the lower heating assembly can move with the pivot in a certain range with respect to the supporting walls, the upper heating assembly can be opened with 0 to 180 degrees with respect to the lower heating assembly and the distance between the upper heating assembly and the lower heating assembly is adjustable. With this grill, excessive oil or juice can be removed conveniently during cooking, and plural ways to use the grill can be flexibly chosen according to food type.

## Description

### TECHNICAL FIELD

The present invention relates to a grill, and more specifically, to a grill comprising two heating elements.

### BACKGROUND ART

A grill or a pan can be used to cook different foods such as hamburger. For most of the prior grills, however, different sides of food must be cooked separately. That is to say, when a food being cooked in a grill, only the side that contacts its cooking element is cooked and the food must be turned over to have its opposite side cooked, which is time-consuming and inconvenient.

There has been another prior grill, wherein both sides of food can be cooked simultaneously. When food type has been programmed in a control assembly, the food is placed on a lower cooking element. Then a press plate having an upper cooking element is placed on the food, whereby the food locates between the upper and lower cooking elements and its two sides can be cooked at the same time. While placing said press plate, the distance between the upper and the lower cooking elements can be automatically adjusted according to the food type programmed in the control assembly. However, although such grill is provided with an upper and a lower cooking element, its upper cooking element can only heat food from its upper surface. Furthermore, only one kind of food can be cooked at a time.

In addition, for prior grills, the heating plate is formed integrally with the heating element thereof, resulting in inconvenience for cleaning and limitation of the food type to be cooked.

### SUMMARY OF THE INVENTION

An object of the present invention is to provide a grill having two cooking elements, which is able to cook both sides of a food or different foods at the same time.

Another object of the present invention is to provide a grill whose cooking elements can be tilted from horizontal direction to a predetermined angle so as to achieve a healthy cooking by removing excessive oil or juice from food.

Still another object of the present invention is to provide a multipurpose grill which can cook a variety of foods.

The above mentioned objects are achieved through the following technical solutions.

The grill of the present invention comprises two supporting walls, an upper heating assembly and a lower heating assembly, wherein said upper heating assemble and said lower heating assembly are arranged between the two supporting walls and the two heating assemblies are connected pivotally with each other, characterized in that said lower heating assembly is pivotally connected to said supporting walls.

Preferably, a heating assembly angle control mechanism is arranged on at least one supporting wall of the grill of the present invention.

Further preferably, the heating assembly angle control mechanism of the grill of the present invention comprises: a plate fixedly arranged on one end of said lower heating assembly with plural position-limiting portions arranged thereon; and a positioning pin arranged on the position of the supporting wall corresponding to the plate and capable of reciprocating with respect to the plate so as to engage with or disengage from the position-limiting portion.

Further preferably, the position-limiting portions are ratchets arranged on at least part of the perimeter of the plate, and the positioning pin is arranged in a radial direction with respect to the plate.

Still preferably, a first spring 51 fitting over the positioning pin biases against the positioning pin toward one end.

Still further preferably, the control mechanism further comprises a control lever having a control slope, which intersects the positioning pin and is longitudinally movably arranged on the supporting walls. The positioning pin has an engagement portion corresponding to the control slope thereon. The control lever contacts the engagement portion of the positioning pin by its control slope. When the control lever moves up and down by pressing a spring button arranged on the upper end thereof, the control lever controls the horizontal reciprocative movement of the positioning pin.

As a substitute for the above mentioned mechanism, it is possible to provide plural axial holes in the plate with the axial holes arranged evenly in a part of the arc of same circumference. The positioning pin is axially disposed with respective to the plate, and secures the plate by cooperating with the axial holes.

For another aspect of the present invention, both ends of the lower heating assembly are fixed with two plates, respectively. Each of the plates has a slot at corresponding positions and the upper heating assembly has a pivot on each end which extends into the corresponding slot, so that the upper heating assembly can pivot with respect to the lower heating assembly or moves along the slots.

Preferably, the plate at one end comprises plural position-limiting portions, while the support of the same end comprises a positioning pin on the position corresponding to the plate. The positioning pin can make reciprocative movement with respect to the plate so as to engage with or disengage from the position-limiting portions.

Further preferably, the position-limiting portions are ratchets arranged on at least part of the perimeter of the plate, and the positioning pin is radially arranged corresponding to the plate. Further preferably, a first spring fits over the positioning pin and is used for biasing the positioning pin toward the plate. Further preferably, a control lever comprising a control slope is arranged on the supporting wall of the same end and intersects the positioning pin. On the other hand, an engagement portion corresponding to the control slope is arranged on the positioning pin, with the control slope of the control lever contacting with the engagement portion of the positioning pin. When the control lever moves up and down by pressing a spring button arranged on the upper end thereof, the control lever controls the horizontal reciprocative movement of the positioning pin.

In addition, axially retractable support pins can also be arranged on the supporting walls of both ends of the grill according to the present invention. When the upper heating assembly translates upward to the highest position along the slots, the support pin can protrude inward to support the upper heating assembly. Preferably, the axial movement of the support pin is controlled by pressing a button with a spring.

In addition, a supporting arm is also arranged fixedly on the position of at least one end of the heating assembly approaching the pivot portion. The upper heating assembly is pivotally connected into the slots of the plate through the pivot arranged on the supporting arm. Immediately close to the supporting wall is set a convex stage which acts to support the supporting arm. When the upper heating assembly pivots through a certain predetermined angle with respect to the lower heating assembly, the lower surface of the supporting arm is leaned against one support slope of the convex stage, wherein preferably the predetermined angle ranges from 90 to 100 degrees.

The grill of the present invention further comprises a drip pan under the lower heating assembly so as to collect oil or juice no matter how inclined the heating surface is or if it is horizontal. When not in use, the drip pan can be slid out for cleaning separately in a dishwasher.

The grill of the present invention can be used in plural ways as a user desires. With the above mentioned arrangements, the upper heating assembly can be covered on the lower heating assembly, or opened to 180 degrees, and it can also be positioned at from 90 to 100 degrees with respect to the lower heating assembly.

While cooking under the situation that the upper heating assembly is closed, both upper and lower surfaces of food can be heated simultaneously in order that the food can be ready quickly. The tilted angle between the upper and lower heating assemblies can be adjusted by continuous pressing on the spring button arranged in the supporting walls and pulling the handles of the heating assemblies at the same time, so that excessive oil or juice can be removed from food and healthy cooking can be achieved. On the other hand, when the upper heating surface is closed, by operating a positioning button on the supporting walls, the upper heating assembly can be maintained at the highest position, thus the grill functions as an oven. In other cases, a user may choose an appropriate height within the range of the maximum height of the upper heating assembly according to the thickness of the food.

When the upper heating assembly is opened to 180 degrees, the upper and lower heating assemblies become two heating areas on which different grill plates can be placed in order to cook two kinds of food at the same time, for example, the grill plate on the lower heating assembly can cook steak while the griddle plate on the upper heating assembly can cook vegetables. When there is no need to use the upper heating assembly, it can be opened to from about 90 to 100 degrees. Here the mechanism of the present invention maintains the upper heating assembly at a position of a substantially right angle so that the user can open and close the heating assemblies conveniently during cooking.

The present invention further comprises plural heating plates so as to cook plural kinds of food. These heating plates 40 includes, but not limited to, grill plate, pancake plate, griddle plate, waffle plate, pizzelle plate and the like, so that a user may make choice according to different kinds of food. Each heating plate has oil flow groove on its back edge so that oil and juice can flow out.

The present invention provides the following advantages: by adjusting the position relationship between the upper and lower heating assemblies, plural functions, such as cooking both sides of food, cooking two kinds of food at the same time, and being used as an oven, can be achieved by the grill. The tilted angle of the heating assemblies according to the present invention can be adjusted freely, accordingly the oil and juice can be removed to different extents, whereby not only controlling the wetness of food for better taste but also providing advantage for health. The heating plates capable of being separated from the grill facilitate regular cleaning.

### BRIEF DESCRIPTION OF THE DRAWINGS

Figure 1 is a perspective view of the grill according to one embodiment of the present invention wherein the upper heating assembly is partially opened.
Figure 2 is a perspective view of the grill according to the embodiment shown in Figure 1 wherein the upper heating assembly is completely opened.
Figure 3 is a perspective view of the grill according to the embodiment shown in Figure 1 wherein the upper and lower heating assemblies are closed and rotate with a certain angle.
Figure 4 is an exploded view of the structure of the grill shown in Figure 1.
Figure 5 is a perspective view of the grill shown in Figure 1 wherein the upper and lower heating assemblies are closed and in a horizontal position with the supporting wall's cover removed to show the angle-controlling mechanism.
Figure 6 is a perspective view of the inside of the plate and positioning pin as shown in Figure 5.
Figure 7 is a partially enlarged view of Figure 5.
Figure 8 is a perspective view of the grill shown in Figure 1 wherein the upper heating assembly is completely opened and the support arm of the upper heating assembly is clearly shown.
Figure 9 is a partially perspective view of the grill shown in Figure 1 wherein the upper heating assembly is partially opened, and the engagement between the support arm of the upper heating assembly and the convex plate is shown.
Figure 10 is schematic view of the cooperation between the supporting arm and the convex stage as shown in Figure 9.
Figure 11 is a section view of the support pin of the grill according to the embodiment.

### EMBODIMENTS

In conjunction with the figures constituting a part of this specification, the present invention will be described with the typical embodiment given as follows.

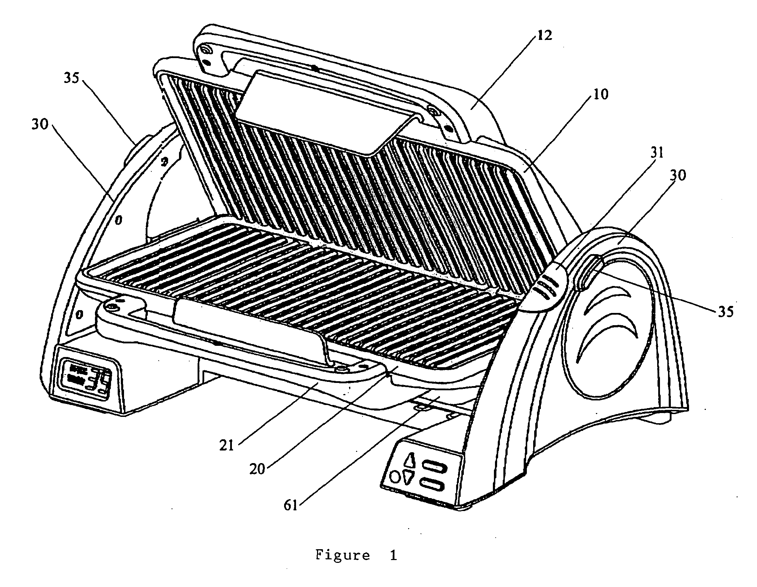

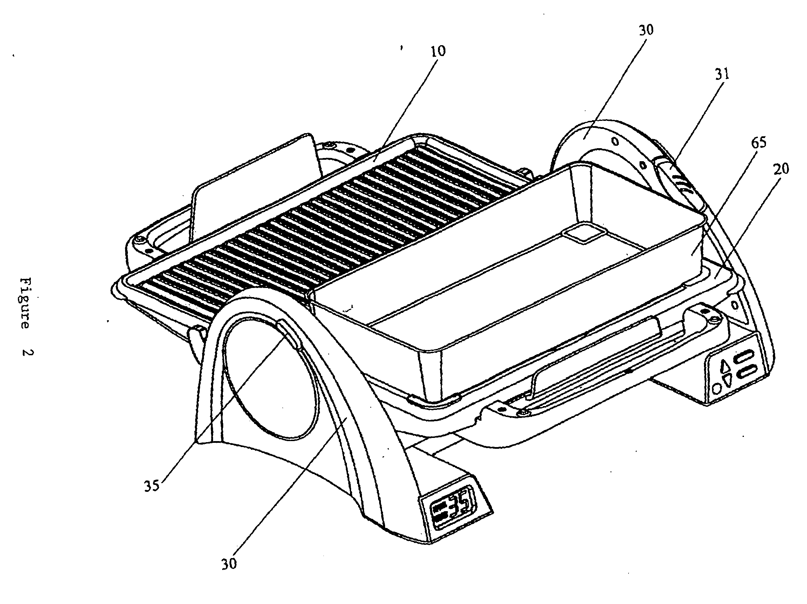

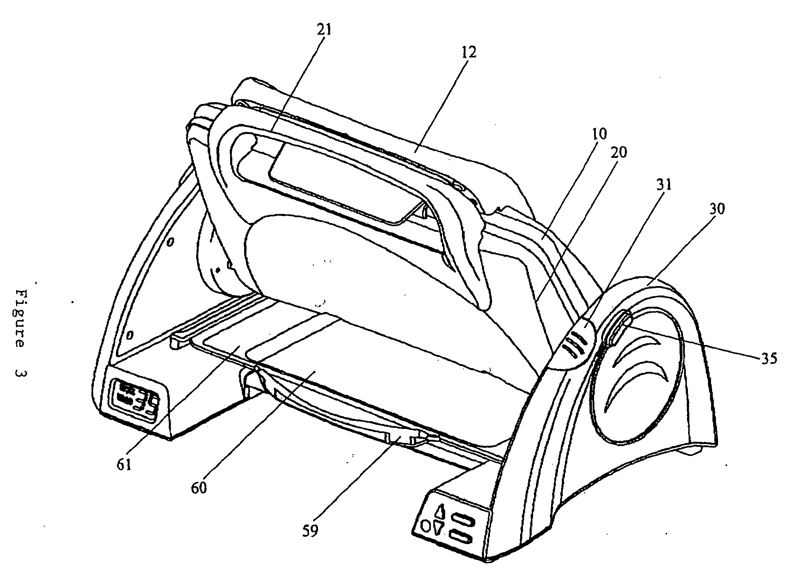

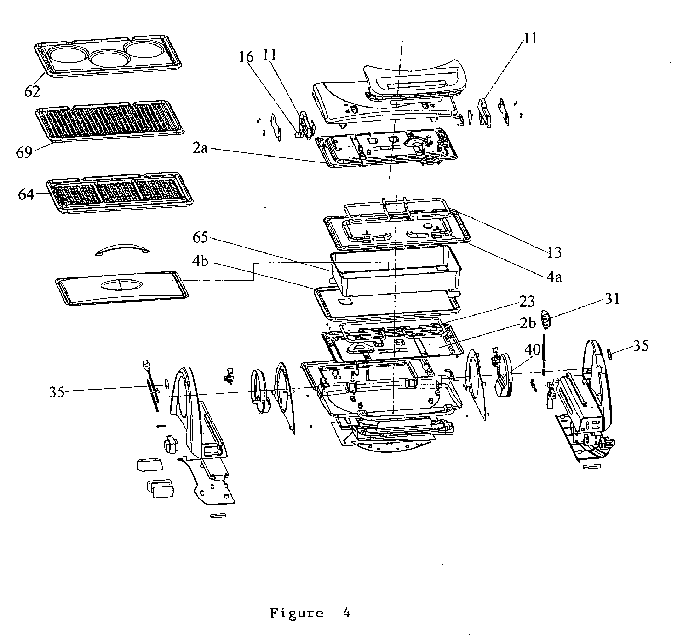

Figures 1-3 are perspective views of the grill according to a typical embodiment of the present invention. Figure 4 is an exploded view of the structure of the grill according to the embodiment shown in Figures 1-3. As shown in Figures 1-4, the grill of the present embodiment basically includes two supporting walls 30, an upper heating assembly 10 and a lower heating assembly 20, wherein the upper heating assembly 10 mainly consists of an upper reflecting plate 2a, an upper heating pipe 13, and an upper aluminum plate 4a, and similarly, the lower heating assembly 20 mainly consists of a lower reflecting plate 2b, a lower heating pipe 23, and an lower aluminum plate 4b.

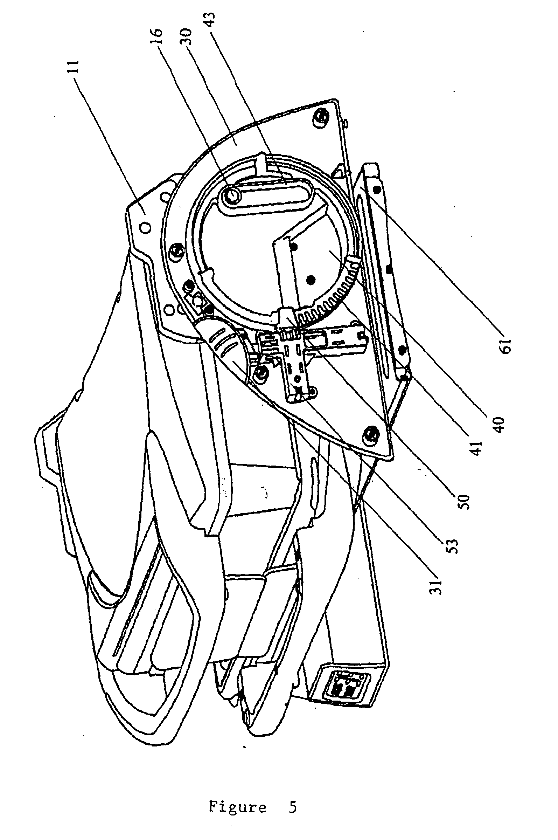

Next, the connecting mechanism between the upper and lower heating assemblies 10, 20 and the supporting walls 30 will be described in details. Referring to Figure 5, the left and right supporting walls 30 are provided with a plate 40 respectively, which are fixedly connected to the lower heating assembly 20. When the upper heating assembly 10 covers the lower heating assembly 20, they can pivot with the plate 40. The two plates 40 are provided with corresponding slots 43 respectively. The supporting arms 11 (which will be described in details hereinafter) of the both ends of the upper heating assembly 10 are provided with pivots 16, respectively. The pivot 16 is arranged in a slot 43 so that the upper heating assembly 10 can pivot with respect to the lower heating assembly 20 or moves along the slot 43. Through the rotation of the pivot 16 in the slot 43, the upper heating assembly 10 can be opened with from 0 to 180 degrees with respect to the lower heating assembly 20. Through the movement of the pivot 16 along the slot 43, the distance between the upper heating assembly 10 and the lower heating assembly 20 is adjustable. The maximum movement range of the upper heating assembly 10 with respect to the lower heating assembly 20 is determined by the length of the slot 43.

In addition, ratchets 41 are arranged on a part of the circumference of the plate 40 (left plate) as shown in Figure 5. The ratchets 41 cooperate with a positioning pin 50 which is arranged movable relative to the plate 40 in its radial direction, so as to fix the upper heating assembly 10 and the lower heating assembly 20 at a certain rotation angle therebetween when the former covers the latter. In the present embodiment, the ratchets 41 are distributed on the circumference of the plate 40 with a range of 60 degrees on which about 10 ratchets are equally arranged, that is to say, the angle of the heating assembly is locked with about 10 shifts in 0 to 60 degrees. Those skilled in the art may change the same accordingly.

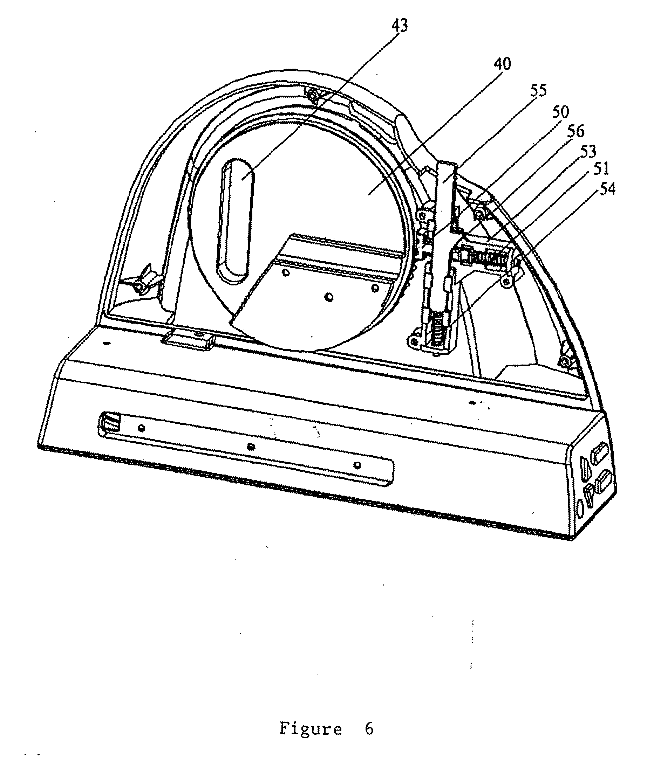

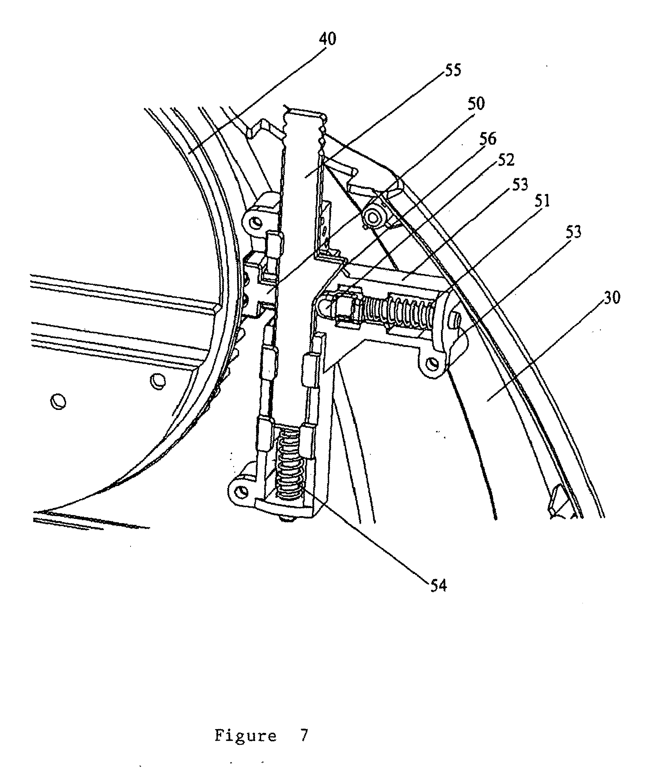

Referring to Figures 5-7, the positioning pin 50 is accommodated in the housing 53 fixedly arranged on the supporting wall 30 and is capable of reciprocating with respect to the plate 40 in a radial direction, in order to engage with or disengage from the ratchet 41 of the plate 40. A first spring 51 fits over the positioning pin 50, biasing the positioning pin 50 toward the plate 40. The mechanism further comprises the control lever 55 with a control slope 56. The control lever 55 intersects the positioning pin 50 and is arranged on the supporting wall 30 so that it can move up and down. The positioning pin 50 has the engagement portion 52 corresponding to the control slope 56. The control slope 56 of the control lever 55 is in contact with the engagement portion 52 of the positioning pin 50. A spring button 31 is arranged on the top end of the control lever 55 (refer to Figures 1-3). When the button 31 pressed down, the control lever 55 moves downward, and the control slope 55 of the control lever 55 acts on the engagement portion 52, pushing the positioning pin 50 backward and disengaging the positioning pin 50 from the plate 40. Here, the upper and lower heating assemblies can be rotated by picking up handles 12 and 21. When the button 31 is released, the control lever 55 moves upward due to the force of the second spring 54, while the positioning pin 50 moves forward under the action of the first spring 51. In such a manner, the upper and lower heating assemblies 10, 20 can be positioned at a desired angle by engaging the plate 40 with the ratchets 41.

Alternatively, it is possible to provide plural axial holes in the plate 40 with the axial holes preferably evenly distributed in one circumference. The positioning pin 50 is arranged in an axial direction corresponding to the plate 40 and locks the plate 40 by engaging with the axial holes.

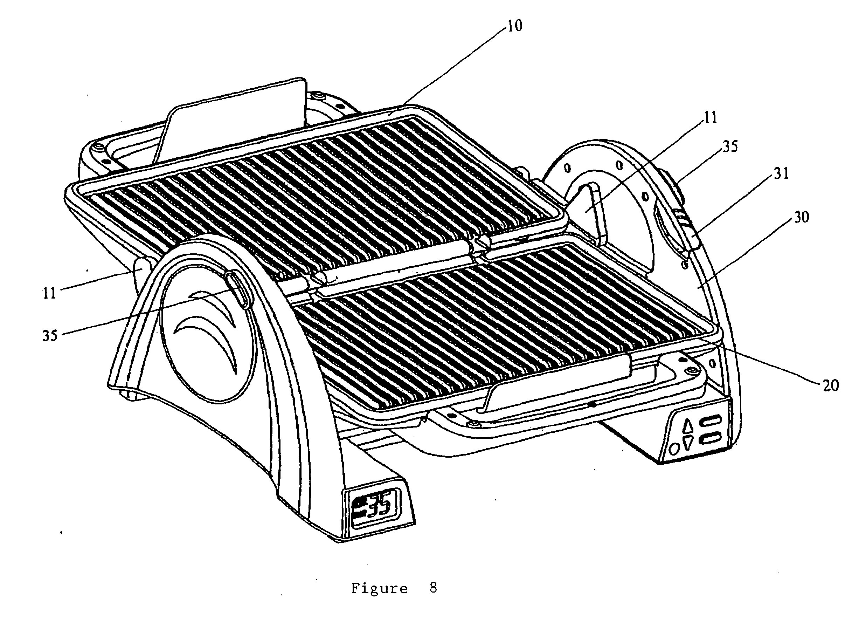

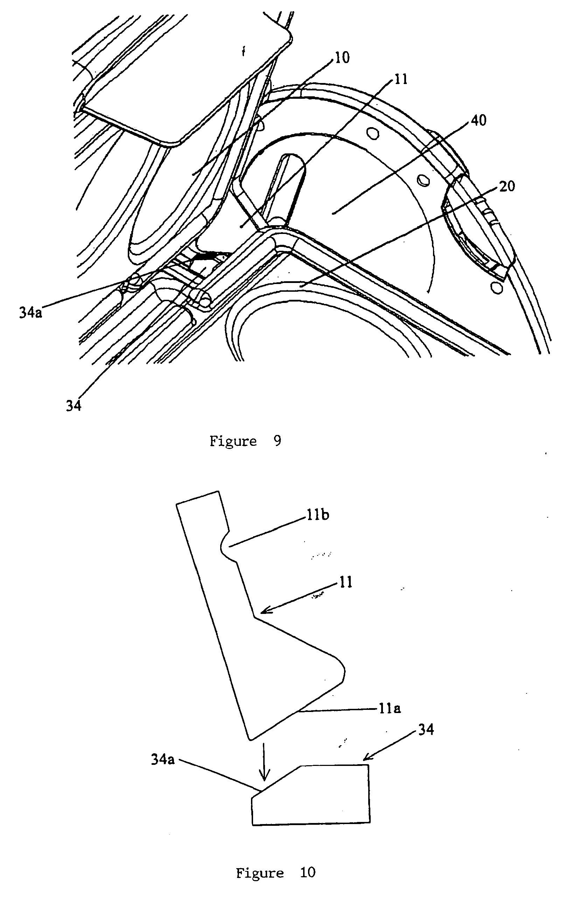

Referring to Figures 8-10, the upper heating assembly 10 is provided with support arms 11 on both ends approaching to the pivot portion. Immediately close to the supporting wall 30, a convex stage 34 having a support slope 34a is arranged corresponding to the support arm 11. In addition, serrations are arranged on the lower surface 11 a of the support arm 11 and on the support slope 34a of the convex stage 34. As shown in Figure 10, when manually rotating the upper heating assembly 10 to about from 90 to 100 degrees with respect to the lower heating assembly 20 and then release it, the lower surface 11 a of the supporting arm 11 is supported against the support slope 34a of the convex stage 34. Thus the upper heating assembly is maintained at this angle without further tilting backward.

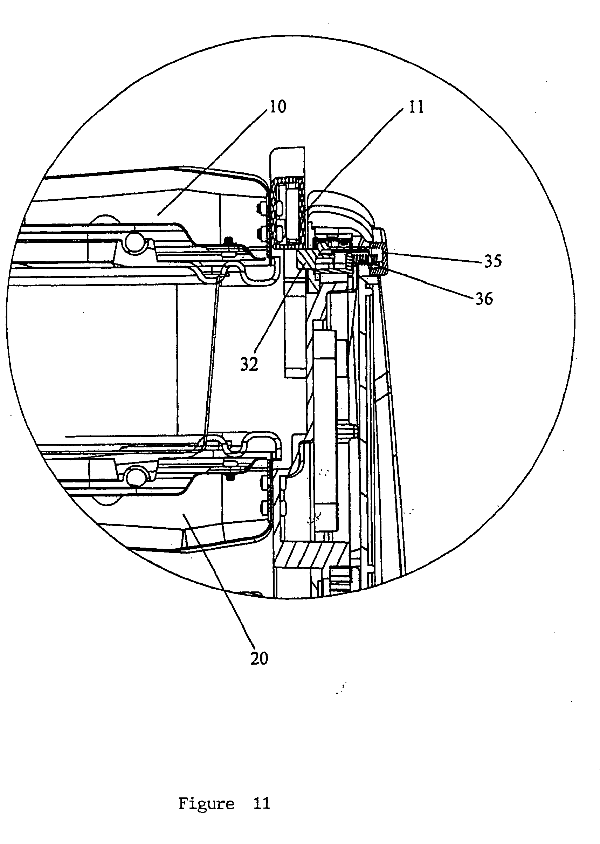

In addition, referring to Figure 11, the supporting walls 30 are respectively provided with positioning mechanisms for positioning the upper heating assembly. The mechanism includes a positioning button 35, a third spring 36, and an axially retractable support pin 32. After the upper heating assembly 10 translates upward along the slots 43 to the highest position and the positioning button 35 is pressed, the support pin 32 protrudes inward to cooperate with the notch 11b on the edge of the support arm 11 to uphold the upper heating assembly 10, thereby the upper heating assembly 10 is maintained at the highest position. In such a manner, the upper and lower heating assemblies function as an oven. When the positioning button 35 is pressed down again, the support pin 32 retracts and does not support the upper heating assembly 10 any longer.

The grill according to the present embodiment further comprises a drip pan 60 which is placed on a bottom board 61 under the lower heating assembly 20 and used for collecting oil or juice. A handle 59 is arranged on one side of the drip pan 60. By pulling the handle, the drip pan can be pulled out and conveniently cleaned.

The grill of the present embodiment is further fitted with one soup-cooking pot 65 and three heating plates with the bottoms of the heating plates respectively shaped as circle 62, bar 63, and pane 64. Each heating plate is provided with oil flow groove at the back edge so that oil and juice can flow out.

Figure 4 shows all the elements of the grill according to the present invention. The elements that are not described herein but illustrated in figures are well known by those skilled in the art. Hence, they are not described here in detail.

The grill of the present invention can be used in different methods depending on user's requirement. By the above mentioned arrangements, the upper heating assembly can cover the lower heating assembly 20 or be opened with 180 degrees. Also it can be positioned at from 90 to 100 degrees with respect to the lower heating assembly, preferably 95 degrees.

While cooking under the situation that the upper heating assembly covers the lower heating assembly, both upper and lower sides of food can be heated simultaneously to achieve a quick cooking. The tilted angle between the upper and lower heating assemblies can be adjusted easily by continuous pressing on the spring button 31 and meanwhile pulling the handles 12 and 21 of the heating assemblies. Thus excessive oil or juice can be removed from food and healthy cooking can be achieved. On the other hand, when the upper heating surface is closed, the upper heating assembly can be maintained at the highest position by operating a positioning button 35 on a supporting wall 30 and the grill functions as an oven. In other cases, a user may choose an appropriate height within the range of the maximum height of the upper heating assembly according to the thickness of the food.

In another embodiment not shown by figures, the upper heating assembly and the lower heating assembly can be fixed and maintained within from 0 to 180 degrees by a positioning mechanism similar to the above mentioned. For example, the side walls of the upper/lower heating assembly close to the supporting walls 30 are respectively arranged with an opening, and the supporting walls 30 are provided with plural holes at the positions along the circumference (ranges from 0 to 180 degrees, half circle). A bolt can be inserted through the opening of the upper/lower heating assembly into the holes in supporting walls 30 respectively from outside, so that the upper/lower heating assemblies are fixed at different angles. Such a structure is relatively more convenient and simple. Of course, those skilled in the art may employ other methods to secure the heating assemblies.

When the upper heating assembly is opened with more than 90 degrees, preferably 180 degrees, the upper and lower heating assemblies become two heating areas on which different grill plates can be placed so as to cook two kinds of food at the same time. For example, the grill plate on the lower heating assembly can be used to cook steak while the griddle plate placed on the upper heating assembly can cook vegetables. When there is no need to use the upper heating assembly, it can be opened with from about 90 to 100 degrees. In such a case, the mechanism of the present invention maintains the upper heating assembly at the position of substantially right angle by virtue of the convex stage and the supporting arm, whereby a user can open and close the heating assemblies conveniently during cooking.

Although only one typical embodiment according to the present invention is illustrated, it is appreciable that the features described herein can be provided separately or in any appropriate combination. On the other hand, various modifications and variations can be made in the present invention without departing from the spirit or scope of the invention. Thus, it is intended that the present invention covers such modifications and variations, provided they come within the scope of the appended claims and their equivalents.

## Claims

1. A grill, comprising two supporting walls (30), an upper heating assembly (10) and a lower heating assembly (20), wherein the upper heating assemble (10) and the lower heating assembly (20) are arranged between the two supporting walls (30), **characterized in that** the lower heating assembly (20) is pivotally connected with the supporting walls (30).

2. The grill according to claim 1, **characterized in that** at least one supporting wall (30) is provided with a heating assembly angle control mechanism.

3. The grill according to claim 2, **characterized in that** the heating assembly angle control mechanism comprises:
a plate (40) fixedly arranged on one end of the lower heating assembly (20) with a position-limiting portion arranged thereon; and
a positioning pin (50) arranged on the position of the supporting wall (30) corresponding to the plate (40) and capable to reciprocate with respect to the plate (40) in order to engage with or disengage from the position-limiting portion.

4. The grill according to claim 3, **characterized in that** the position-limiting portion is ratchets (41) arranged on at least part of the circumference of the plate (40) and the positioning pin (50) is arranged in the radial direction with respect to the plate (40).

5. The grill according to claim 4, **characterized in that** a first spring (51) fits over the positioning pin (50) and the first spring (51) biases the positioning pin (50) toward one end.

6. The grill according to claim 5, **characterized in that** the control mechanism further comprises a control lever (55) having a control slope (56), wherein the control lever (55) intersects the positioning pin (50) and can be longitudinally movably arranged on the supporting walls (30), the positioning pin (50) comprises an engagement portion (52) corresponding to the control slope (56), the control slope (56) of the control lever (55) contacts with the engagement portion (52) of the positioning pin (50), and when the control lever (55) moves up and down by pressing a spring button (31) arranged on the upper end thereof, the control lever (55) controls the horizontal reciprocative movement of the positioning pin (50).

7. The grill according to claim 3, **characterized in that** the position-limiting portion is axial holes arranged in the plate (40), and the positioning pin (50) is axially arranged corresponding to the plate (40).

8. The grill according to claim 1, **characterized in that** both ends of the lower heating assembly (20) are fixedly arranged with plates (40) respectively, wherein the two plates (40) are provided with the corresponding slots (43) respectively, and both ends of the upper heating assembly (10) respectively have pivots (16) that respectively extend into the slots (43) such that the upper heating assembly (10) can pivot with respect to the lower heating assembly (20) or moves along the slot (43).

9. The grill according to any of claims 3-7, **characterized in that** the end of the lower heating assembly (20) opposite to the angle control mechanism is also provided fixedly with plate (40), and corresponding slots (43) are respectively arranged on the two plates (40), the both ends of the upper heating assembly (10) respectively have pivots (16) that respectively extend into the slots (43) such that the upper heating assembly (10) pivots with respect to the lower heating assembly (20) or moves along the slot (43).

10. The grill according to claim 8, **characterized in that** the supporting walls (30) are respectively provided with an axially retractable support pin (32), and when the upper heating assembly (10) moves upward to the highest position along the slot (43), the support pin (32) can protrude inward to support the upper heating assembly (10).

11. The grill according to claim 9, **characterized in that** the supporting walls (30) are respectively provided with the axially retractable support pin (32), and when the upper heating assembly (10) moves upward to the highest position along the slot (43), the support pin (32) can protrude inward to support the upper heating assembly (10).

12. The grill according to claim 10 or claim 11, **characterized in that** at least one end of the upper heating assembly (10) is fixedly provided with a supporting arm (11) at the position close to the pivot portion, and a convex stage (34) corresponding to the supporting arm (11) is arranged immediately close to the supporting wall (30), and when the upper heating assembly (10) pivots with a certain predetermined angle with respect to the lower heating assembly (20), a lower surface (11a) of the supporting arm is supported against one support slope (34a) of the convex stage (34).

13. The grill according to claim 12, **characterized in that** the lower surface of the supporting arm and the support slope of the convex plate comprise serration.

14. The grill according to claim 12, **characterized in that** the predetermined angle is from 90 to 100 degrees.

15. The grill according to any of claims 1-8, 10, 11, 13, 14, further comprising an drip pan (60) arranged under the lower heating assembly (20) and used for collecting oil or juice.

16. The grill according to claim 12, further comprising an drip pan (60) arranged under the lower heating assembly (20) and used for collecting oil or juice.
